**Europäisches Patentamt**

**European Patent Office**

**Office européen des brevets**

(19)

(11) Veröffentlichungsnummer : **0 287 001 B1**

(12) # EUROPÄISCHE PATENTSCHRIFT

(45) Veröffentlichungstag der Patentschrift :
24.04.91 Patentblatt 91/17

(51) Int. Cl.⁵ : **B29C 45/54, B29C 45/20**

(21) Anmeldenummer : 88105685.7

(22) Anmeldetag : 09.04.88

(54) **Vorrichtung zum Spritzgiessen.**

(30) Priorität : **11.04.87 DE 3712325**

(43) Veröffentlichungstag der Anmeldung :
**19.10.88 Patentblatt 88/42**

(45) Bekanntmachung des Hinweises auf die
Patenterteilung :
**24.04.91 Patentblatt 91/17**

(84) Benannte Vertragsstaaten :
**AT BE CH DE ES FR GB GR IT LI LU NL SE**

(56) Entgegenhaltungen :
**DE-A- 1 579 151**
**DE-B- 1 007 053**
**DE-B- 2 549 813**
**FR-A- 2 242 223**

(73) Patentinhaber : **LANDSHUTER
WERKZEUGBAU ALFRED STEINL GMBH &
CO. KG
Liebigstrasse 5
W-8300 Landshut (DE)**

(72) Erfinder : **Steinl, Alfred, Dipl.-Ing.(FH)
Rebenring 64
W-8300 Altdorf (DE)**

(74) Vertreter : **Gustorf, Gerhard, Dipl.-Ing.
Patentanwalt Dipl.-Ing. Gerhard Gustorf
Bachstrasse 6 A
W-8300 Landshut (DE)**

## Beschreibung

Die Erfindung betrifft eine Vorrichtung zum Spritzgießen von Werkstoffen, insbesondere Gummi, Kautschuk o. dgl., mit einer Plastifiziereinheit, die einen Extruderausgang hat, und mit einer Injektionseinheit, die einen Spritzkolben sowie einen Spritzkanal mit einer Abgabeöffnung aufweist, an die der Extruderausgang zum Füllen der Injektionseinheit anschließbar ist, deren Spritzkanal nach einer Entkoppelung von der Plastifiziereinheit für den Einspritzvorgang mit dem Formwerkzeug koppelbar ist.

Bei einer bekannten Vorrichtung zum Spritzgießen sind die Plastifiziereinheit und die Injektionseinheit in einem Spritzkopf fest miteinander verbunden. Der Extruderausgang mündet dabei etwa rechtwinklig in den Spritzkanal. Im Mündungsbereich ist eine Rückflußsperre vorgesehen, die als Kugelrückschlagventil ausgebildet ist. Als nachteilig hat sich dabei herausgestellt, daß nach jedem Spritzvorgang in der Rückflußsperre und den nicht unbeträchtlichen Kanalstrecken zwischen der Injektionseinheit und dem Formwerkzeug Werkstoffreste zurückbleiben, die zu Füllungsfehlern beim Spritzgießen führen.

Ferner sind Vorrichtungen zum Spritzgießen bekannt, bei denen eine Extruderschnecke gleichzeitig die Injektionseinheit bildet. Abgesehen von den verhältnismäßig geringen Injektionsdrücken kann auch mit diesen Vorrichtungen keine befriedigende Dosiergenauigkeit erreicht werden.

Eine Vorrichtung der eingangs umrissenen Bauart ist Gegenstand des deutschen Gebrauchsmusters 76 01 785. Die zum Spritzgießen von Kunststoffen dienende Vorrichtung hat zwei an einem um 180° schwenkbaren Arm befestigte Injektionseinheiten, von denen die eine an die Plastifiziereinheit angeschlossen ist, während die andere mit dem Formwerkzeug verbunden ist. Sowohl im Bereich der Plastifiziereinheit als auch des Formwerkzeugs ist je ein Lochschieber vorgesehen, der während der Schwenkung des Armes die jeweiligen Kanalöffnungen abschließt. Aufgrund des Lochschiebers sind jedoch Dosierungenauigkeiten nicht zu vermeiden, denn in den Kanalenden unmittelbar im Anschluß an den Schieber bleiben immer Werkstoffreste zurück, die beim folgenden Arbeitszyklus entweder entfernt oder entsprechend aufbereitet werden müssen. Letzteres ist bei der Verarbeitung von Thermoplasten durch ein entsprechendes Erhitzen möglich, nicht jedoch bei Gummi oder Kautschuk, da dieser inzwischen irreversibel vulkanisiert und einen nicht wieder verwendbaren Rest bildet.

In der DE-OS 22 01 404 ist eine Spritzgießmaschine für Kunststoffe beschrieben und dargestellt, bei der die Plastifiziereinheit mit der Injektionseinheit über einen Kanal fest verbunden ist, in dem ein Rückschlagventil vorgesehen ist. Auch bei dieser Vorrichtung sind Werkstoffreste in den Verbindungswegen nicht zu vermeiden, wobei vor allem auch im Endabschnitt des Spritzkanals ein Werkstoffüberschuß zurückbleibt, da sich dieser Abschnitt zum Formwerkzeug hin düsenartig verengt.

Der Erfindung liegt die Aufgabe zugrunde, eine Vorrichtung der eingangs angegebenen Gattung zur Verfügung zu stellen, die trotz einfachen Aufbaus den steigenden Anforderungen an die Dosiergenauigkeit gerecht wird.

Bei der gattungsgemäßen Vorrichtung wird diese Aufgabe erfindungsgemäß dadurch gelöst, daß der ohne Absperrorgane ausgebildete Spritzkanal für die kegelförmige Spitze des Spritzkolbens eine kegelstumpfförmige Sitzfläche hat, an die sich ein Diffusorabschnitt mit sich zum Formwerkzeug hin stetig erweiterndem Querschnitt anschließt.

Durch die erfindungsgemäß vorgesehene Ausbildung des Spritzkanals wird erreicht, daß der Spritzkolben am Ende seines Injektionshubs auf der kegelstumpfförmigen Sitzfläche aufliegt, so daß nur noch ein kleiner Rest des Werkstoffs im Diffusorabschnitt zurückbleibt, der beim anschließenden Anheben der Injektionseinheit an der Einspritzöffnung des Formwerkzeugs hängenbleibt, so daß bei einem folgenden Spritzvorgang der Spritzkanal frei ist und keinen vulkanisierten Werkstoffrückstand mehr enthält. Bisher erforderliche Rückflußsperren sind nicht vorgesehen, so daß auch aus diesem Grund Füllungsfehler vermieden werden. Bei den bisherigen Vorrichtungen niemals ganz vermeidbare Überspritzungen, die kompliziert und teuer zu entfernen sind und bei einer Massenfertigung einen Materialverlust darstellen, sind nicht mehr zu befürchten.

Da die Injektionseinheit einen Spritzkolben aufweist, hat das gegenüber bekannten Systemen, bei denen die Extruderschnecke gleichzeitig die Injektionseinheit bildet, nicht nur den Vorteil wesentlich höherer Spritzdrücke, sondern auch den Vorzug, daß aufgrund des relativ langen Spritzkolbenhubs eine hohe Meß-und Dosiergenauigkeit erzielt werden kann.

Einen besonders guten Übergang zwischen der Injektionseinheit und der konstruktiv davon getrennten Plastifiziereinheit beim Füllen der Injektionseinheit kann dadurch erzielt werden, daß der Spritzkanal in einem Mundstück der Injektionseinheit ausgebildet ist, das an seiner freien Stirnseite einen kalottenartigen Vorsprung hat, der in dichtenden Eingriff mit einer etwa kegelstumpfartigen Vertiefung am ebenfalls ohne Absperrorgan ausgebildeten Extruderausgang der Plastifiziereinheit gebracht werden kann. Durch den Kalottensitz wird eine gut abgedichtete Verbindung mit einer ringförmigen Linienberührung geschaffen.

Nach einem weiteren Merkmal der Erfindung ist der Extruderausgang als Kaltkanal in einem ständig unterhalb der Reaktionstemperatur des Werkstoffs erwärmten Kopfstück der Plastifiziereinheit ausgebildet. Damit bleibt zwar im Kaltkanal ein Werkstoffrest zurück, aber dieser Rest wird ständig auf einer Temperatur gehalten, die eine irreversible Reaktion des Werkstoffs verhindert. Im Falle von Kautschuk, der bei etwa 180°C vulkanisiert, beträgt die Temperatur des Kaltkanals etwa 70°C. Die geschilderte Maßnahme hat damit den weiteren Vorzug, daß keine Absperrorgane notwendig sind.

Die konstruktiv günstigste Lösung wird dann erzielt, wenn die Plastifiziereinheit relativ zu der vertikal verfahrbaren Injektionseinheit waagrecht verschiebbar ist. Die vertikal angeordnete Injektionseinheit begünstigt eine vollkommene Entleerung des Spritzkanals aufgrund der Schwerkraft, während in der Plastifiziereinheit der als Kaltkanal ausgebildete Extruderausgang nicht wie bisher waagrecht ausgebildet ist, was ein Auslaufen während der nicht gekoppelten Stellungen begünstigt, sondern senkrecht angeordnet ist.

Die Trennung von Plastifiziereinheit und Injektionseinheit bietet die Möglichkeit, der Injektionseinheit zwei alternativ mit dieser koppelbare Plastifiziereinheiten zuzuordnen. Auf diese Weise können etwa zwei verschiedene Gummimischungen in eine Form gespritzt werden, ohne daß die Gefahr besteht, daß im Spritzkanal ein Rest der zuerst gespritzten Gummimischung zurückbleibt.

Dabei ist es günstig, wenn die beiden Plastifiziereinheiten etwa im rechten Winkel zueinander angeordnet sind.

Ferner ist es vorteilhaft, wenn bei dieser Weiterbildung der Erfindung das Formwerkzeug zwei Einspritzöffnungen aufweist und zur alternativen Koppelung mit dem Spritzkanal der Injektionseinheit relativ zu diesem verstellbar ist.

Die Erfindung ist nachstehend an zwei Ausführungsbeispielen erläutert, die in der Zeichnung dargestellt sind.

Es zeigen :

Figuren 1 bis 8 schematische Darstellungen einer ersten Vorrichtung der Erfindung in einzelnen, nacheinander ablaufenden Phasen eines Einspritzzyklus,

Figur 9 die vergrößerte Längsschnittdarstellung der Plastifiziereinheit im Bereich des Extruderausgangs,

Figur 10 die vergrößerte Längsschnittdarstellung der Injektionseinheit im Bereich des Spritzkanals,

Figuren 11, 12, 14 bis 19 und 21 bis 26 schematische Darstellungen einer zweiten Ausführungsform der Erfindung in den unterschiedlichen Arbeitsphasen und

Figuren 13 und 20 die schematische Draufsicht dieser Vorrichtung in zwei unterschiedlichen Stellungen des Formwerkzeugs.

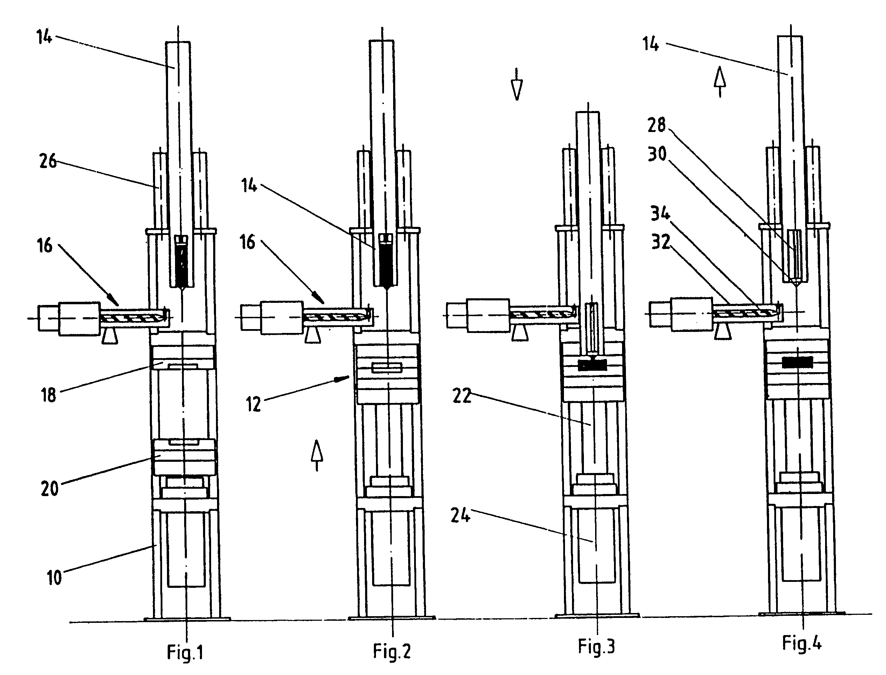

Die in den Figuren 1 bis 8 gezeigte Vorrichtung zum Spritzgießen von Gummi, Kautschuk oder Mischungen davon hat ein vertikales Gestell 10, das im unteren Teil ein Formwerkzeug 12 und im oberen Teil eine Injektionseinheit 14 trägt. Ferner ist an einer Seite des Gestells 10 eine Plastifiziereinheit 16 befestigt.

Das Formwerkzeug 12 hat einen festen, oberen Formteil 18 und einen vertikal dazu beweglichen, unteren Formteil 20. Der untere Formteil 20 ist an der Kolbenstange 22 eines hydraulischen Schließzylinders 24 befestigt.

Die Injektionseinheit 14 ist an vertikalen Führungssäulen 26 des Gestells 10 über eine nicht weiter dargestellte Hydraulik in vertikaler Richtung verfahrbar. Im unteren Teil der Injektionseinheit 14 ist ein Spritzzylinder 28 ausgebildet, in dem ein Spritzkolben 30 vertikal verschiebbar angeordnet ist. Der hydraulische Antrieb für den Spritzkolben 30 ist in der Injektionseinheit 14 untergebracht und ebenfalls nicht weiter dargestellt.

Die an einer Seite des Gestells 14 angebrachte Plastifiziereinheit 16 hat eine in einem Gehäuse 32 gelagerte, waagrecht angeordnete Extruderschnecke 34, die das über einen nicht dargestellten Einzugstrichter zugeführte Rohmaterial durch Erwärmen und Verdichten plastifiziert und über einen in Figur 9 gezeigten, vertikalen Extruderausgang 36 in noch zu beschreibender Weise an die Injektionseinheit 14 abgibt. In Figur 9 ist zu erkennen, daß der Extruderausgang 36 am Ende eine kegelstumpfartige Vertiefung 38 hat. Der Extruderausgang 36 ist als sogenannter Kaltkanal in einem Kopfstück 56 der Plastifiziereinheit 16 ausgebildet, deren Gehäuse 32 ein Kanalsystem 58 für den Umlauf eines Wärmemediums, vorzugsweise Flüssigkeit aufweist. Auf diese Weise wird das Kopfstück 56 und damit auch der Kaltkanal ständig auf einer Temperatur gehalten (z.B. 70° C), die unterhalb der Reaktionstemperatur des Gummis oder Kautschuks liegt (etwa 180° C).

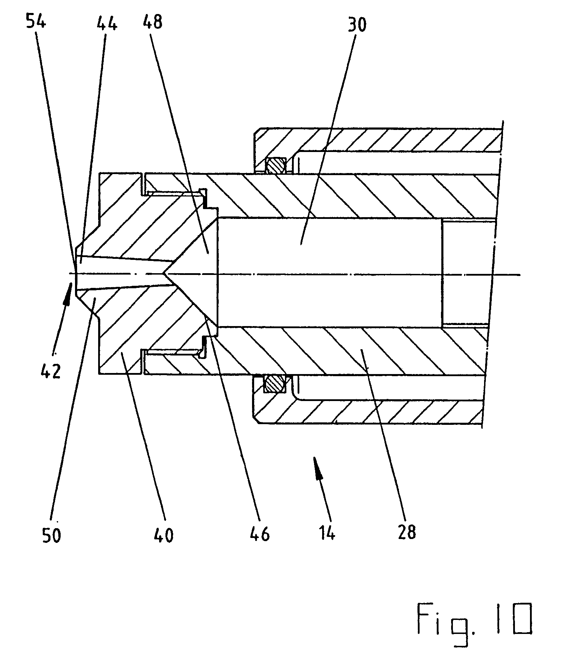

In Figur 10 ist der untere Teil der Injektionseinheit 14 im Längsschnitt dargestellt. Der vertikal verschiebbare Spritzzylinder 28 hat am unteren Ende ein Mundstück 40, in dem zentrisch ein Spritzkanal 42 ausgebildet ist. Der Spritzkanal 42 hat einen zum Formwerkzeug 12 gerichteten Diffusorabschnitt 44, der sich zur Abgabeöffnung 54 hin stetig erweitert. Das obere Ende des Spritzkanals 42 ist als im Längsschnitt kegelstumpfförmige Sitzfläche 46 für die ebenfalls kegelförmige Spitze 48 des Spritzkolbens 30 ausgebildet. Wie Figur 10 ferner zeigt, hat das Mundstück 40 an seiner freien Stirnseite einen kalottenartigen Vorsprung 50, der als Kugelkalotte oder als Kegelstumpf ausgebildet sein kann. Dabei ist die Form dieses kalottenartigen Vorsprungs 50 so gewählt, daß er an die Vertiefung 38 im Extruderausgang 36 angepaßt ist und bei einer Koppelung der Injektionseinheit 14 mit der Plastifiziereinheit 16 eine dichtende Berührung (Linienberührung oder Flächenberührung) mit der Vertiefung 38 schafft.

Figur 1 zeigt die Vorrichtung in der Phase, bei der das Formwerkzeug 12 geöffnet und die Plastifiziereinheit 16 aus dem Bewegungsbereich der Injektionseinheit 14 zurückgefahren ist. Der Spritzzylinder 28 der Injektionseinheit 14 ist mit einer Gummimischung (schwarz eingezeichnet) gefüllt.

Nachdem das Formwerkzeug 12 durch Zusammenfahren des oberen Formteils 18 und des unteren Formteils 20 geschlossen worden ist (Figur 2), wird die Injektionseinheit 14 gemäß Figur 3 in Richtung des eingezeichneten Pfeiles abgesenkt, bis das in Figur 10 im einzelnen dargestellte Mundstück 40 auf einer nicht näher gezeigten Einspritzöffnung im oberen Formteil 18 des Formwerkzeugs 12 aufsitzt. In dieser Stellung wird der Spritzkolben 30 ausgeschoben, so daß er die Gummimishung aus dem Spritzzylinder 28 in die Form drückt, wodurch in dieser das schwarz angedeutete Formteil entsteht.

Figur 4 zeigt, daß im Anschluß daran die Injektionseinheit 14 wieder angehoben wird, wobei der Spritzkolben 30 in seiner unteren Stellung bleibt.

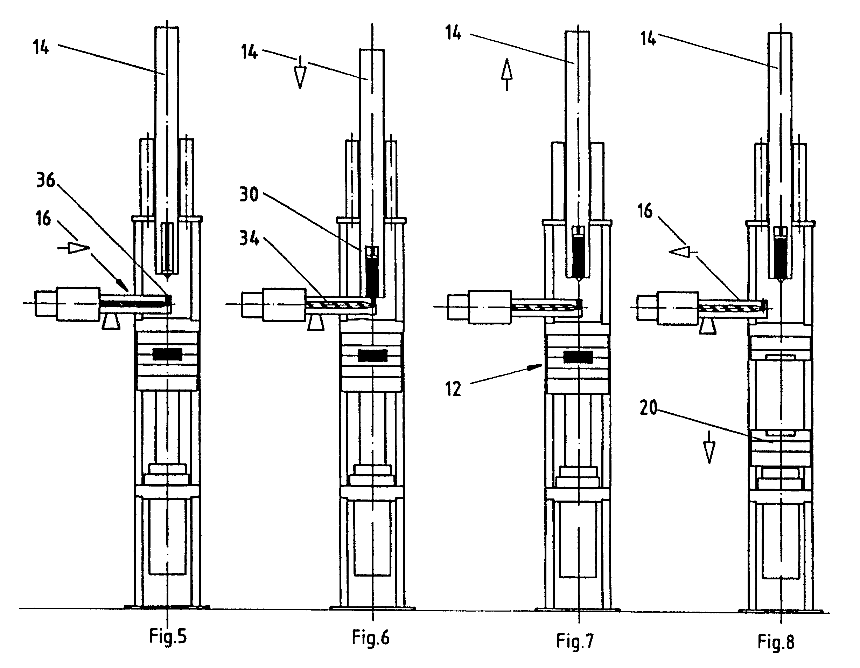

Nun wird gemäß Figur 5 die Plastifiziereinheit 16 in Richtung des eingezeichneten Pfeiles waagrecht so verfahren, daß der Extruderausgang 36 genau zentral unter dem Spritzkanal 42 der Injektionseinheit 14 steht. In dieser Stellung kann jetzt die Injektionseinheit 14 abgesenkt werden, so daß entsprechend Figur 6 der kalottenartige Vorsprung 50 des Mundstücks 40 in der Vertiefung 38 des Extruderausgangs 36 sitzt. Wenn diese Verbindung zwischen der Plastifiziereinheit 16 und der Injektionseinheit 14 hergestellt ist, wird der Antrieb der Extruderschnecke 34 eingeschaltet, so daß diese die Gummimischung durch ihren Extruderausgang 36 und über den Spritzkanal 42 der Injektionseinheit 14 in den Spritzzylinder 28 drückt. Dabei wird, wie Figur 6 weiter zeigt, der Spritzkolben 30 angehoben. Der Antrieb der Extruderschnecke 34 wird automatisch abgeschaltet, sobald im Spritzzylinder 28 das gewünschte Füllvolumen erreicht ist. Diesem Füllvolumen entspricht eine bestimmte Höhe des Spritzkolbens 30 im Spritzzylinder 28, die zuvor an einer Schalttafel eingestellt worden ist.

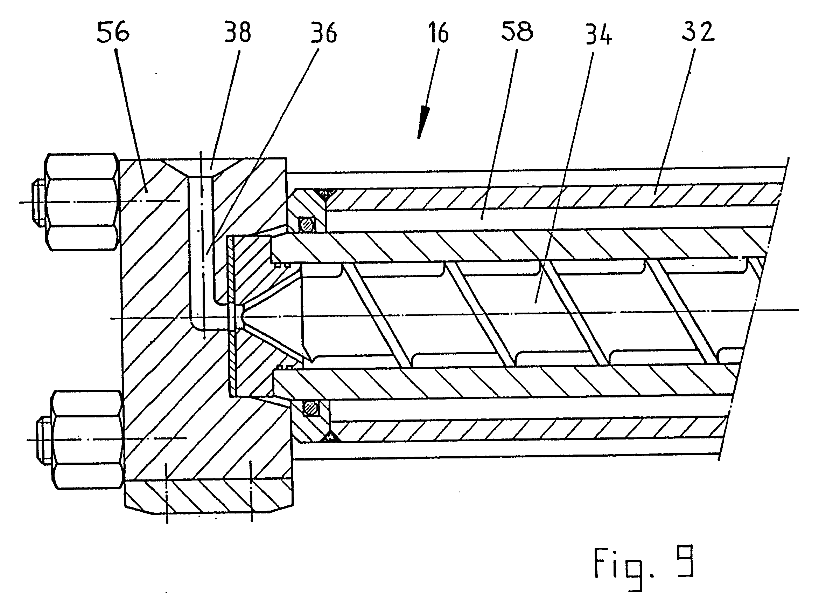

Figur 7 zeigt, daß im Anschluß daran die gesamte Injektionseinheit 14 wieder angehoben wird, so daß die Plastifiziereinheit 16 in ihre in Figur 8 gezeigte Stellung zurückgefahren werden kann. Dabei wird gleichzeitig der untere Formteil 20 des Formwerkzeugs 12 abgesenkt, so daß das inzwischen vulkanisierte Formteil ausgeworfen werden kann. Da in dieser Stellung die Abgabeöffnung 54 der Injektionseinheit 14 kurzzeitig - bis zur Anlage am Formwerkzeug 12 - frei ist, wird der Spritzkolben 30 um eine kurze Strecke weiter zurückgezogen, so daß die eingefüllte Gummimischung druckfrei wird und nicht auslaufen kann. Nach dem Schließen des Formwerkzeugs 12 beginnt ein neuer Einspritzzyklus.

Dadurch, daß bei abgesenktem Spritzkolben 30 im Spritzzylinder 28 die Spitze 48 des Spritzkolbens 30 eng auf der kegelstumpfförmigen Sitzfläche 46 aufliegt, bleibt in diesem Teil des Spritzkanals 42 kein Materialrest zurück. Lediglich in dem Diffusorabschnitt 44 des Spritzkanals 42 ist nach dem Einspritzen ein Materialrest vorhanden, der an dem gespritzten Formteil anvulkanisiert und beim Anheben der Injektionseinheit 14 ohne Rückstände den Diffusorabschnitt 44 verläßt, da sich dessen Querschnitt zur Abgabeöffnung 54 hin stetig erweitert.

Aufgrund dieser Maßnahmen ist der Spritzkanal 42 für den nächsten Einspritzvorgang frei von Rückständen.

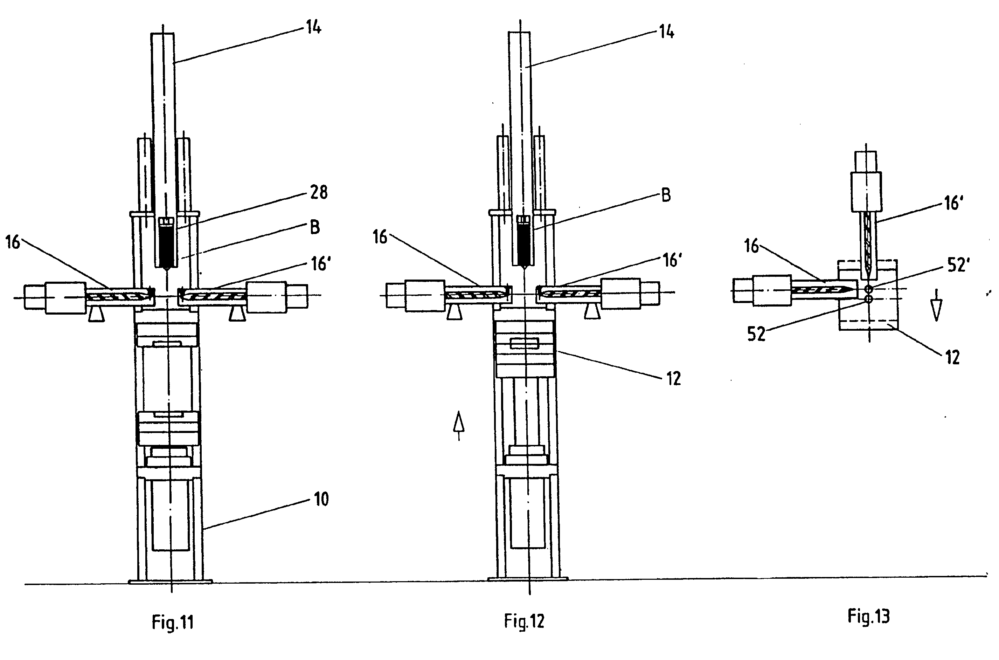

Die Figuren 11 bis 26 zeigen eine Weiterbildung der Erfindung, bei der an dem Gestell 10 zwei Plastifiziereinheiten 16 und 16' befestigt sind, die gemäß Figur 13 im rechten Winkel zueinander angeordnet sind. Aus Gründen der anschaulicheren Darstellung ist die Plastifiziereinheit 16' in den Figuren 11, 12, 14 bis 19 und 21 bis 26 um 90° gedreht eingezeichnet.

Der in Figur 11 gezeigte Zustand der Vorrichtung entspricht der Phase der Figur 1, bei der das Formwerkzeug 12 geöffnet und der Spritzzylinder 28 der Injektionseinheit 14 gefüllt ist. Beide Plastifiziereinheiten 16 und 16' sind aus dem Bewegungsbereich der Injektionseinheit 14 zurückgezogen.

Bei dieser Ausführungsform der Erfindung dienen die beiden Plastifiziereinheiten 16 und 16' zur Zuführung von zwei unterschiedlichen Gummi- oder Kautschukmischungen A und B. Im Stadium der Figur 11 enthält der Spritzzylinder 28 die Mischung B, die ihm zuvor von der Plastifiziereinheit 16' zugeführt worden ist.

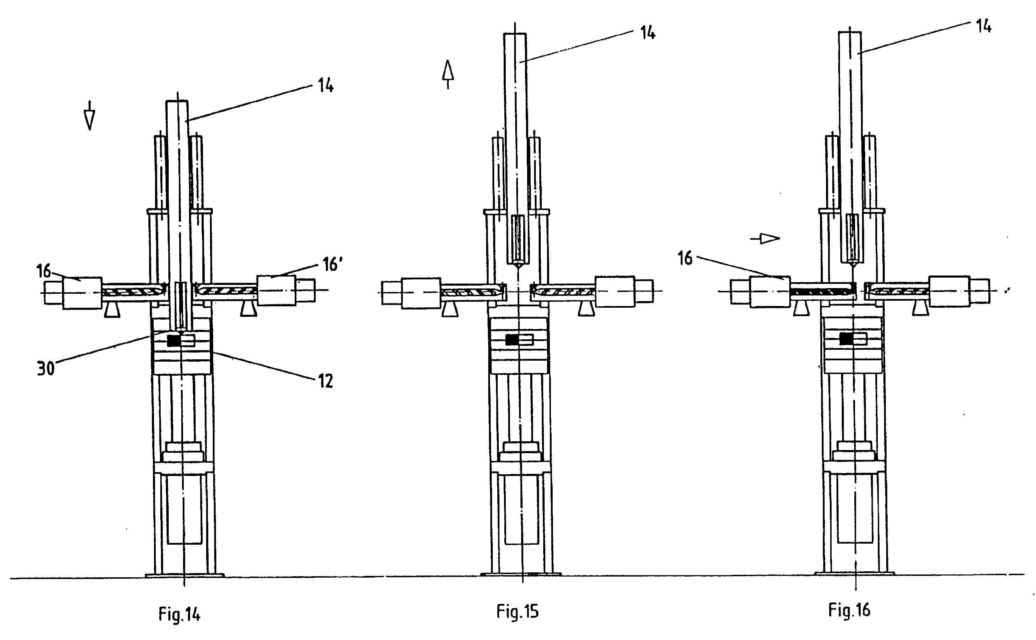

In Figur 13 ist angedeutet, daß das Formwerkzeug 12 zwei Einspritzöffnungen 52, 52' aufweist, die auf der Längsachse der Plastifiziereinheit 16' liegen. In der Stellung der Figur 12, in der das Formwerkzeug 12 inzwischen geschlossen worden ist, ist dieses gemäß Figur 13 in Achsrichtung der Plastifiziereinheit 16' so verschoben worden, daß die Einspritzöffnung 52' genau unter dem Spritzkanal 42 der Injektionseinheit 14 liegt. Wenn nun gemäß Figur 14 diese abgesenkt wird, drückt der Spritzkolben 30 die Mischung B durch die Einspritzöffnung 52' in die Form des Formwerkzeugs 12, im dargestellten Ausführungsbeispiel in den linken Teil dieser Form.

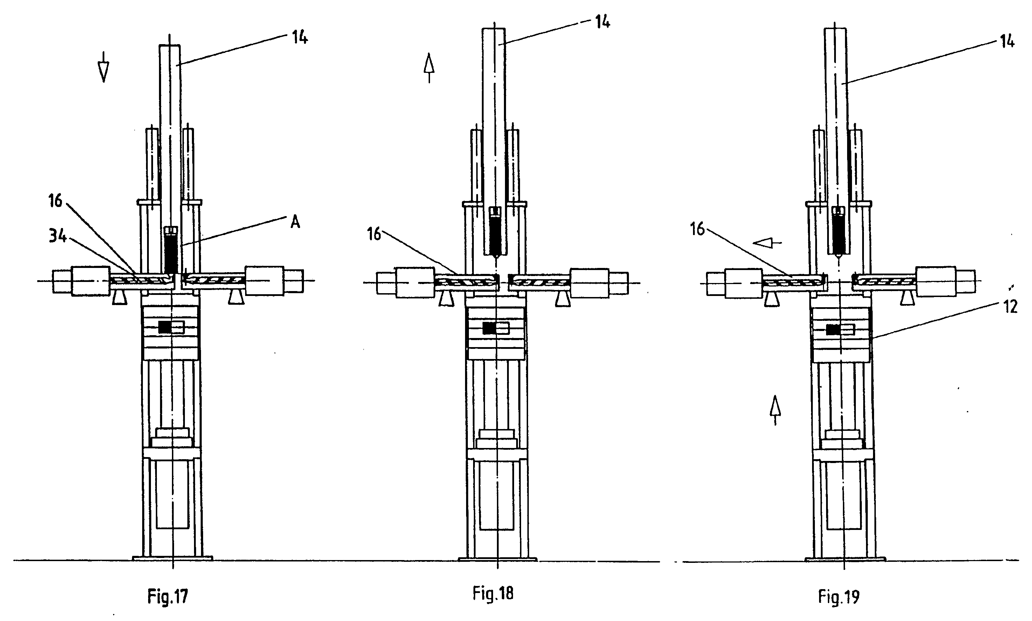

Nach dem anschließenden Anheben der Injektionseinheit 14 (Figur 15) wird die Plastifiziereinheit 16 unter die Injektionseinheit 14 verschoben (Figur 16), so daß nach dem anschließenden Absenken der Injektionseinheit 14 auf die Plastifiziereinheit 16 deren Extruderschnecke 34 die Mischung A in den Spritzzylinder 28 drückt (Figur 17).

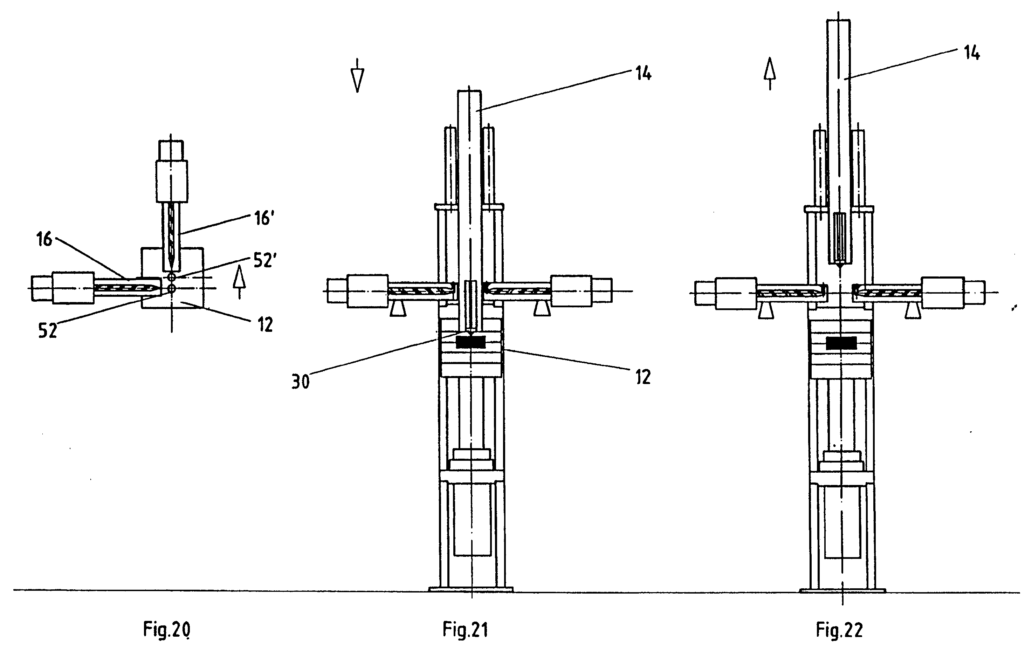

Wie Figur 18 zeigt, wird nun die Injektionseinheit 14 wieder abgehoben, damit die Plastifiziereinheit 16 in ihre Ausgangsstellung zurückgezogen werden kann (Figur 19). Gleichzeitig wird in dieser Stellung das Formwerkzeug 12 in Richtung der Längsachse der Plastifiziereinheit 16' so verschoben, daß gemäß Figur 20 die andere Einspritzöffnung 52 genau unter dem Spritzkanal 42 der Injektionseinheit 14 liegt.

Wenn diese anschließend entsprechend Figur 21 abgesenkt wird, drückt der Spritzkolben 30 die Mischung A über die Einspritzöffnung 52 des Formwerkzeugs 12 in den anderen Teil der Form. Dies ist deshalb ohne Überwindung von Rückständen der zuerst eingespritzten Mischung B möglich, weil aufgrund der erfindungsgemäßen Ausbildung des Spritzkanals 42 keine Reste in diesem zurückbleiben.

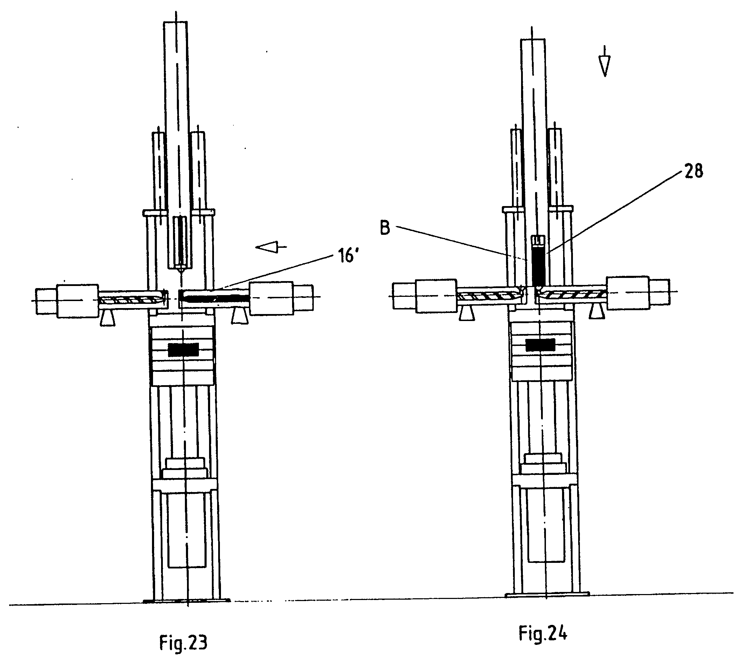

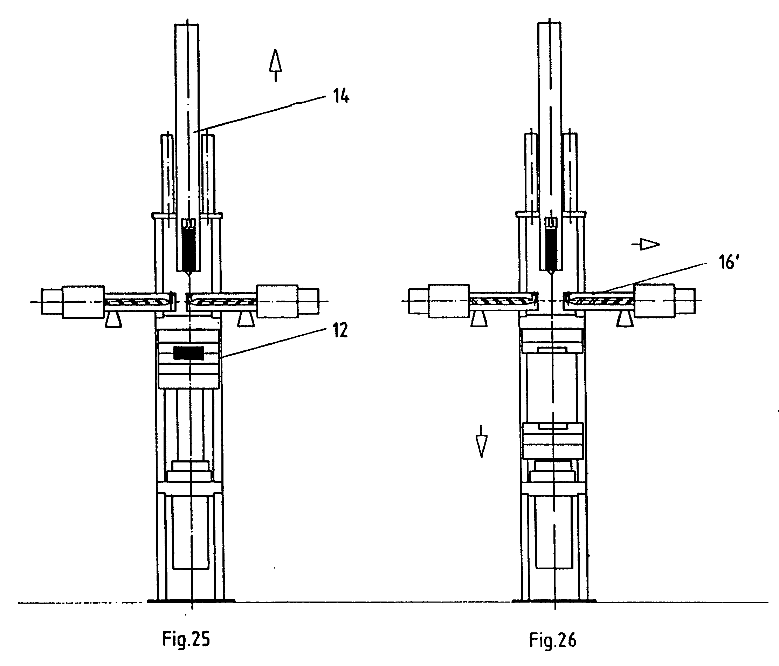

Nachdem die Injektionseinheit 14 wieder hochgefahren worden ist (Figur 22), wird gemäß Figur 23 die Plastifiziereinheit 16' wieder eingefahren, welche den Spritzzylinder 28 mit der Mischung B füllt (Figur 24). Nach erneutem Hochfahren der Injektionseinheit 14 (Figur 25) kann die Plastifiziereinheit 16' wieder zurückgezogen werden, um nach Öffnen des Formwerkzeugs 12 und Ausschieben des aus zwei inzwischen vulkanisierten Mischungen bestehenden Formteils einen neuen Einspritzzyklus zu beginnen.

## Ansprüche

1. Vorrichtung zum Spritzgießen von Werkstoffen, insbesondere Gummi, Kautschuk o. dgl., mit einer Plastifiziereinheit (16), die einen Extruderausgang (36) hat, und mit einer Injektionseinheit (14), die einen Spritzkolben (30) sowie einen Spritzkanal (42) mit einer Abgabeöffnung (54) aufweist, an die der Extruderausgang (36) zum Füllen der Injektionseinheit (14) anschließbar ist, deren Spritzkanal (42) nach einer Entkoppelung von der Plastifiziereinheit (16) für den Einspritzvorgang mit dem Formwerkzeug (12) koppelbar ist, dadurch **gekennzeichnet,** daß der Spritzkolben (30) eine Kegelförmige Spitze aufweist, daß der ohne Absperrorgane ausgebildete Spritzkanal (42) für die kegelförmige Spitze (48) des Spritzkolbens (30) eine kegelstumpfförmige Sitzfläche (46) hat, an die sich ein Diffusorabschnitt (44) mit sich zum Formwerkzeug (12) hin stetig erweiterndem Querschnitt anschließt.

2. Vorrichtung nach Anspruch 1, dadurch gekennzeichnet, daß der Spritzkanal (42) in einem Mundstück (40) der Injektionseinheit (14) ausgebildet ist, das an seiner Stirnseite einen kalottenartigen Vorsprung (50) hat, der in dichtenden Eingriff mit einer etwa kegelstumpfartigen Vertiefung (38) am ebenfalls ohne Absperrorgane ausgebildeten Extruderausgang (36) des Plastifiziereinheit (16) bringbar ist.

3. Vorrichtung nach Anspruch 1 oder 2, dadurch gekennzeichnet, daß der Extruderausgang (36) als Kaltkanal in einem ständig unterhalb der Reaktionstemperatur des Werkstoffs erwärmten Kopfstück (56) der Plastifiziereinheit (16) ausgebildet ist.

4. Vorrichtung nach einem der vorhergehenden Ansprüche, dadurch gekennzeichnet, daß die Plastifiziereinheit (16) relativ zu der vertikal verfahrbaren Injektionseinheit (14) waagrecht verschiebbar ist.

5. Vorrichtung nach einem der vorhergehenden Ansprüche, dadurch gekennzeichnet, daß der Injektionseinheit (14) zwei alternativ mit dieser koppelbare Plastifiziereinheiten (16, 16') zugeordnet sind.

6. Vorrichtung nach Anspruch 5, dadurch gekennzeichnet, daß die beiden Plastifiziereinheiten (16, 16') etwa im rechten Winkel zueinander angeordnet sind.

7. Vorrichtung nach Anspruch 5 oder 6, dadurch gekennzeichnet, daß das Formwerkzeug (12) zwei Einspritzöffnungen (52, 52') aufweist und zur alternativen Koppelung mit dem Spritzkanal (42) der Injektionseinheit (14) relativ zu diesem verstellbar ist.

## Claims

1. Apparatus for injection moulding materials, in particular rubber, caoutchouc or the like, with a plasticising unit (16) having an extruder outlet (36) and with an injection unit (14) having an injection ram (30) and an injection channel (42) with a delivery opening (54) onto which the extruder outlet (36) can be connected for filling the injection unit (14), whereof the injection channel (42) may be coupled to the form tool (12) after uncoupling from the plasticising unit (16) for the injection process, characterised in that the injection ram (30) has a conical tip, in that the injection channel (42), constructed without shut-off devices, has for the conical tip (48) of the injection ram (30) a frustoconical seating surface (46) to which there is connected a diffuser section (44) of cross section continuously widening towards the form tool (12).

2. Apparatus according to Claim 1, characterised in that the injection channel (42) is constructed in a mouthpiece (40) of the injection unit (14), this mouthpiece having on its end face a cap-shaped projection (50) which may be brought into sealing engagement with an approximately frustoconical depression (38) on the extruder outlet (36), also constructed without shut-off devices, of the plasticising unit (16).

3. Apparatus according to Claim 1 or 2, characterised in that the extruder outlet (36) is constructed as a cold channel in a head piece (56), which is constantly warmed below the reaction temperature of the material, of the plasticising unit (16).

4. Apparatus according to one of the preceding claims, characterised in that the plasticising unit (16) may be displaced horizontally relative to the injection unit (14), which may traverse vertically.

5. Apparatus according to one of the preceding claims, characterised in that two plasticising units (16, 16') are associated with the injection unit (14) and may alternately be coupled thereto.

6. Apparatus according to Claim 5, characterised in that the two plasticising units (16, 16') are arranged approximately at right angles to one another.

7. Apparatus according to Claim 5 or 6, characterised in that the mould tool (12) has two injection openings (52, 52') and, for alternate coupling to the injection channel (42) of the injection unit (14), may be displaced relative thereto.

## Revendications

1. Dispositif pour l'injection de matière, plus particulièrement de gomme, caoutchouc ou similaires, comprenant une unité de plastification (16) incluant une sortie d'extrudeuse (36), et une unité d'injection (14) incluant un piston d'injection (30) ainsi qu'un canal d'injection (42) avec une embouchure de transfert (54) accouplable à la sortie de l'extrudeuse (36) pour le remplissage de l'unité d'injection (14), le canal d'injection (42) étant accouplable au moule pour une opération d'injection après un désaccouplement de l'unité de plastification (16), caractérisé en ce que le piston d'injection (30) présente une extrémité de forme sphérique, en ce que le canal d'injection (42) ne comportant pas d'organe de restriction comprend une surface d'assise (46) en forme de sphère tronquée en relation avec l'extrémité sphérique (48) du piston d'injection (30), siège (46) duquel part une partie diffuseur (44) de section transversale augmentant constamment jusqu'au moule (12).

2. Dispositif selon la revendication 1, caractérisé en ce que le canal d'injection (42) est formé à l'intérieur d'une pièce d'embouchure (40) de l'unité d'injection (14), en ce que la face frontale présente une protubérance (50) ayant la forme d'une calotte pouvant venir en contact serré avec une profondeur (38) en forme sphérique tronquée à la sortie de l'extrudeuse (36) ne comprenant lui aussi aucun organe de restriction au sein de l'unité de plastification (16).

3. Dispositif selon la revendication 1 ou 2 caractérisé en ce que la sortie de l'extrudeuse (36) est formée en tant que canal froid à l'intérieur d'une pièce de tête (56) maintenue en permanence à une température inférieure à la température de réaction de la matière.

4. Dispositif selon l'une quelconque des revendications précédentes, caractérisé en ce que l'unité de plastification (16) est disposée sensiblement à l'horizontale par rapport à l'unité d'injection (14) mobile dans le sens vertical.

5. Dispositif selon l'une des revendications précédentes, caractérisé en ce que l'unité d'injection (14) est disposée vis-à-vis de deux unités de plastification (16 ou 16') avec lesquelles elle peut être accouplée alternativement.

6. Dispositif selon la revendication 5, caractérisé en ce que les deux unités de plastification (16, 16') sont disposées sensiblement à angle droit l'une par rapport à l'autre.

7. Dispositif selon la revendication 5 ou 6, caractérisé en ce que le moule (12) comprend deux ouvertures d'injection (52, 52') et qu'il est déplaçable pour accouplage alternatif avec le canal d'injection (42) de l'unité d'injection (14).

Fig.1 Fig.2 Fig.3 Fig.4

Fig.5          Fig.6          Fig.7          Fig.8

Fig. 9

EP 0 287 001 B1

Fig. 10

30

48

44

54

28

14

46

40

50

42

Fig.11

Fig.12

Fig.13

Fig.14　　　　　　　　　Fig.15　　　　　　　　　Fig.16

EP 0 287 001 B1

Fig.17          Fig.18          Fig.19

Fig.20

Fig.21

Fig.22

EP 0 287 001 B1

Fig.23

Fig.24

Fig.25

Fig.26